# FASCICULE DE BREVET EUROPEEN

(11) **EP 2 076 470 B1**
(45) Date de publication et mention de la délivrance du brevet: **13.12.2017**
(21) Numéro de dépôt: 07866490.1
(22) Date de dépôt: 25.10.2007
(51) Int. Cl.: C03C 10/12, C03C 3/083, C03C 1/00

(54) **PROCEDE D'AFFINAGE D'UN VERRE ALUMINO-SILICATE DE LITHIUM ET VITROCERAMIQUE OBTENUE**
VERFAHREN ZUM LÄUTERN EINES LITHIUMALUMINIUMSILIKATGLASES UND SO ERHALTENE GLASKERAMIK
METHOD FOR REFINING A LITHIUM ALUMINO-SILICATE GLASS AND GLASS CERAMIC THUS OBTAINED

(30) Priorité: 27.10.2006 FR 0654585; 25.04.2007 FR 0754691
(43) Date de publication de la demande: 08.07.2009
(73) Titulaire: Eurokera S.N.C., 02407 Château Thierry (FR)
(72) Inventeur: MARTIN, Dorothée, MA 02140 Cambridge Massachussets (US); LEFRERE, Yannick, F-92240 Malakoff (FR)
(74) Mandataire: Saint-Gobain Recherche
(86) Numéro de dépôt international: PCT/FR2007/052246
(87) Numéro de publication internationale: WO 2008/053110

(56) Documents cités:
- DE-A1- 19 939 787
- FR-A- 2 657 079
- NL-A- 6 605 388
- US-A- 3 511 629
- US-A- 3 788 865
- US-A- 5 069 826

## Description

L'invention concerne le domaine des vitrocéramiques.

Elle se rapporte plus précisément à un procédé d'affinage d'un verre alumino-silicate de lithium à partir duquel, par un traitement thermique approprié, il est possible d'obtenir les vitrocéramiques.

De telles vitrocéramiques sont destinées notamment à être utilisées comme articles de cuisine, en particulier en tant que plaques de cuisson recouvrant des éléments chauffants tels que des foyers halogènes ou radiants, ou ustensiles de cuisson.

Si les vitrocéramiques alumino-silicate de lithium se révèlent être bien adaptées à ces utilisations, c'est grâce à leur aspect esthétique que l'on peut faire varier dans une large mesure, à leurs propriétés mécaniques, notamment à la résistance au chocs importante du fait de leur faible coefficient d'expansion thermique dans la gamme des températures d'utilisation, et à leurs propriétés chimiques de résistance aux acides comme aux bases.

Les vitrocéramiques possèdent en outre des propriétés optiques spécifiques qui dépendent de leur usage. Ainsi, dans le cas d'une plaque de cuisson, il est important que la vitrocéramique présente une faible aptitude à transmettre la lumière afin que l'utilisateur ne puisse pas, ou difficilement, distinguer les éléments chauffants sous-jacents quand ils ne fonctionnent pas. Mais dans le même temps, la plaque de cuisson doit permettre de visualiser les éléments lorsqu'ils chauffent, sans toutefois éblouir l'utilisateur, de manière à réduire le risque de brûlures au contact de la plaque chaude. La vitrocéramique doit encore présenter de bonnes propriétés de transmission énergétique, en particulier du rayonnement infrarouge produit par les éléments chauffants pour permettre que les aliments soient portés à la température désirée en un laps de temps le plus faible possible.

De manière classique, la production de vitrocéramique s'effectue en plusieurs étapes : a) fusion des matières premières vitrifiables contenant au moins un agent de nucléation ; b) formage et refroidissement du verre à une température plus basse que son domaine de transformation ; c) traitement thermique de céramisation du verre.

Au cours de l'étape a), il est nécessaire d'affiner le verre afin d'éliminer les bulles de gaz générés par la fusion des matières premières et d'éviter la présence de particules résiduelles incomplètement fondues (« infondus ») provenant de ces mêmes matières. La présence de bulles et d'infondus est préjudiciable aux propriétés mécaniques de la vitrocéramique finale.

Il est bien connu que les oxydes d'arsenic et d'antimoine sont des agents d'affinage efficaces pour produire les vitrocéramiques (voir EP-A-437 228 ; US-A-3 788 865). Ces oxydes sont avantageux car ils ne modifient pas significativement le coefficient d'expansion thermique du verre et n'augmentent pas la vitesse de nucléation du β-quartz lors de l'étape c) de céramisation.

Les oxydes d'arsenic et d'antimoine présentent cependant des inconvénients.

Aux températures auxquelles l'affinage est effectué (généralement entre 1400 et 1700°C), les oxydes d'arsenic et d'antimoine ont une volatilité importante et de ce fait leur usage doit être rigoureusement contrôlé pour ne pas nuire à la santé des opérateurs et éviter tout rejet de ces composés dans l'atmosphère.

En outre, le verre traité avec ces agents d'affinage ne peut pas être transformé en ruban selon le procédé traditionnel opérant par flottage du verre sur un bain de métal fondu, notamment d'étain, car il se forme à la surface du verre une pellicule d'arsenic ou d'antimoine qui réduit significativement les performances optiques du verre.

D'autres agents d'affinage ont été proposés en remplacement des oxydes d'arsenic et d'antimoine.

Dans EP-A-156479, il est proposé d'introduire 0,2 à 2 % d'oxyde de cérium ou des cérates dans des compositions de verre alumino-silicate de lithium. Les vitrocéramiques obtenues présentent une coloration ambre à brun foncé selon la nature des colorants ajoutés à la composition de verre.

Dans JP-A-11100229 et JP-A-11100230, une vitrocéramique colorée est obtenue en ajoutant 0,1 à 2 % d'oxyde d'étain dans une composition de verre contenant 0,01 à 0,5 % d'oxyde de vanadium.

WO-A-02/16279 décrit la réalisation d'une vitrocéramique transparente colorée par de l'oxyde de vanadium utilisant de l'oxyde d'étain, de l'oxyde de cérium, un sulfate ou un chlorure en tant qu'agent d'affinage.

Dans US-A-2002/0023463, l'affinage de vitrocéramiques incolores ou colorées est effectué en ajoutant 0,2 à 0,6 % d'oxyde d'étain.

Il a été constaté que le niveau d'affinage du verre obtenu avec les oxydes précités venant en substitution de l'oxyde d'arsenic et de l'oxyde d'antimoine est insuffisant et doit être amélioré.

La présente invention a pour but de fournir procédé d'affinage d'un verre alumino-silicate de lithium qui permet d'atteindre un niveau d'affinage élevé sans recourir aux agents d'affinage classiques tels que l'oxyde d'arsenic, l'oxyde d'antimoine et l'oxyde d'étain, et de produire le verre par flottage sur un bain de métal fondu.

L'invention a également pour but de fournir un verre apte à être transformé en vitrocéramique, notamment un verre coloré, en particulier par de l'oxyde de vanadium, pour la réalisation de plaques de cuisson, qui présente une faible transmission dans le visible et une transmission élevée du rayonnement infrarouge.

Ces buts sont atteints selon l'invention grâce au procédé d'affinage de verre alumino-silicate de lithium selon la revendication 1. Le sulfure joue le rôle d'agent d'affinage du verre. Le sulfure est choisi parmi le sulfure de zinc, le sulfure de fer et le sulfure d'argent, les sulfures de métal alcalin, par exemple le sulfure de potassium, le sulfure de sodium et le sulfure de lithium, les sulfures de métal alcalino-terreux, par exemple le sulfure de calcium, le sulfure de barium, le sulfure de magnésium et le sulfure strontium, les composés susceptibles de générer des sulfures dans les conditions de la fusion et les mélanges des sulfures et/ou des composés précités. Les sulfures préférés sont le sulfure de zinc, le sulfure de lithium, le sulfure de barium, le sulfure de magnésium et le sulfure de strontium. Le sulfure de zinc s'est avéré particulièrement avantageux.

Le sulfure peut aussi être introduit dans les matières premières vitrifiables sous la forme d'un laitier ou d'une fritte de verre enrichie en sulfure qui présentent l'avantage d'accélérer la digestion des infondus, d'améliorer l'homogénéité chimique du verre et sa qualité optique. Toutefois, il est bien connu que les laitiers contiennent aussi du fer en quantité importante qui réduit la transmission des infrarouges. De ce point de vue, il est préférable d'utiliser des frittes de verre dont la composition chimique, notamment en fer, peut être parfaitement contrôlée.

De préférence, le sulfure est ajouté aux matières vitrifiables en une quantité inférieure à 2 %, avantageusement inférieure à 1 % et mieux encore comprise entre 0,07 et 0,8 % du poids total des matières vitrifiables.

Avantageusement, du coke ou un composé carboné est ajouté dans les matières premières vitrifiables. De manière conventionnelle, par « verre alumino-silicate de lithium » on entend un verre qui comprend les constituants suivants dans les limites définies ci-après exprimées en pourcentages pondéraux :

| | |
|---|---|
| SiO₂ | 52 - 75 % |
| Al₂O₃ | 18 - 27 % |
| Li₂O | 2,5 - 5,5 % |
| K₂O | 0 - 3 % |
| Na₂O | 0 - 3 % |
| ZnO | 0 - 3,5 % |
| MgO | 0 - 3 % |
| CaO | 0 - 2,5 |
| BaO | 0 - 3,5 % |
| SrO | 0 - 2 % |
| TiO₂ | 1,2 - 5,5 % |
| ZrO₂ | 0 - 3 % |
| P₂O₅ | 0 - 8 % |

Ce verre peut comprendre jusqu'à 1 % en poids de constituants non essentiels qui n'affectent pas la fusion du verre ou la dévitrification ultérieure conduisant à la vitrocéramique.

De préférence, le verre alumino-silicate de lithium comprend les constituants suivants dans les limites définies ci-après exprimées en pourcentages pondéraux :

| | |
|---|---|
| SiO₂ | 65 - 70 % |
| Al₂O₃ | 18 - 19,8 % |
| Li₂O | 2,5 - 3,8 % |
| K₂O | 0 - <1,0 % |
| Na₂O | 0 - <1,0 % |
| ZnO | 1,2 - 2,8 % |
| MgO | 0,55 - 1,5 % |
| BaO | 0 - 1,4 % |
| SrO | 0 - 1,4 % |
| TiO₂ | 1,8 - 3,2 % |
| ZrO₂ | 1,0 - 2,5 % |

Selon un mode de réalisation avantageux, le verre alumino-silicate de lithium est coloré, notamment par l'ajout d'au moins un des agents colorants suivants dans les limites définies ci-après exprimées en pourcentages pondéraux :

| | |
|---|---|
| Fe₂O₃ | 0 - 1 % |
| NiO | 0 - 1 % |
| Cr₂O₃ | 0 - 1 % |
| CuO | 0 - 1 % |
| CoO | 0 - 1 % |
| Mn₃O₄ | 0 - 1 % |
| V₂O₅ | 0 - 1 % |

et la somme des pourcentages des agents colorants étant au moins égale à 0,02 %, de préférence au moins égale à 0,045 % et n'excédant pas 2 %

La teneur en agent(s) colorant(s) est à adapter en fonction de la nature et de l'intensité de la couleur souhaitée.

V₂O₅ est l'agent colorant préféré. Il permet de fournir un verre apte à donner une vitrocéramique utilisable en tant que plaque de cuisson dont la couleur est particulièrement recherchée, à savoir qu'elle présente un aspect noir en réflexion et une teinte brune à nuance rouge au niveau des éléments chauffants lorsque ceux-ci fonctionnent.

Il s'est avéré que le sulfure utilisé en tant qu'agent d'affinage du verre est apte à réduire l'oxyde de vanadium, qui passe ainsi de l'état de vanadium V⁵⁺ à l'état de V⁴⁺ et de V³⁺, l'une et/ou l'autre de ces deux formes permettant de conférer à la vitrocéramique la coloration attendue, et d'abaisser sa transmission dans le visible sans pour autant diminuer sa transmission dans l'infrarouge.

De préférence, le taux de V₂O₅ varie de 0,045 à 1 %, avantageusement de 0,045 à 0,5 %, plus particulièrement de 0,045 à 0,2 % et mieux encore de 0,06 à 0,15 %.

Après l'étape d'affinage, le verre obtenu est traité dans les conditions habituelles pour la production de vitrocéramique.

Ainsi, le verre est mis en forme, par exemple sous forme d'un ruban dans les conditions du procédé opérant par flottage du verre en fusion sur un bain d'étain fondu, ledit ruban étant ensuite découpé en plaques, ou directement sous forme de plaque par laminage, ou encore être moulé à la forme souhaitée.

Le verre mis en forme subit ensuite un traitement thermique visant à le transformer en vitrocéramique.

Le verre peut par exemple subir un cycle de céramisation comprenant les étapes suivantes :
a) élévation de la température jusqu'au domaine de nucléation, généralement situé au voisinage du domaine de transformation, notamment à 50-80°C par minute,
b) traversée de l'intervalle de nucléation (670-800°C) en une vingtaine de minutes,
c) élévation de la température jusqu'à la température T du palier de céramisation comprise entre 900 et 1000°C en 15 à 30 minutes,
d) maintien de la température T du palier de céramisation pendant une temps t de 10 à 25 minutes,
e) refroidissement rapide jusqu'à la température ambiante.

Toutefois, une céramisation à une température plus élevée que celle indiquée ci-dessus, notamment entre 1050 et 1200°C, provoque une transformation des cristaux transparents de β-quartz en cristaux de β-spodumène qui donnent à la vitrocéramique une couleur blanche en l'absence de tout colorant.

La vitrocéramique obtenue à partir du verre alumino-silicate de lithium affiné dans les conditions du procédé de l'invention et coloré par au moins un des oxydes précités, en particulier l'oxyde de vanadium, constitue un objet selon l'invention.

La vitrocéramique se caractérise en ce que qu'elle est dénuée d'oxyde d'arsenic, d'oxyde d'antimoine et d'oxyde d'étain, en ce qu'elle contient au moins agent colorant choisi parmi Fe₂O₃, NiO, Cr₂O₃, CuO, CoO, Mn₃O₄ et V₂O₅, et en ce qu'elle présente un facteur de transmission lumineuse sous illuminant D65 (TL_{D65}) inférieur ou égal à 6 % et un facteur de transmission des radiations infrarouges (T_{IR}) supérieur à 50 %, mesurés sous une épaisseur de 3 mm.

Le facteur de transmission lumineuse sous illuminant D65 est mesuré selon la norme établie par la Commission Internationale de l'Eclairage (1931).

Le facteur de transmission des radiations infrarouges est mesuré dans les conditions de la norme EN410.

De préférence, le facteur T_{IR} est supérieur à 60 % et avantageusement supérieur à 65 %.

Comme déjà indiqué, le pourcentage de chaque agent colorant est inférieur ou égal à 1 % et la somme des pourcentages des agents colorants n'excède pas 2 %.

De préférence, la vitrocéramique colorée renferme 0,045 à 1 % en poids de V₂O₅, avantageusement de 0,045 à 0,5 %, plus particulièrement de 0,045 à 0,2 % et mieux encore de 0,06 à 0,15 %.

Il a été observé que la vitrocéramique contenant du V₂O₅ présente une bonne résistance au vieillissement ; en effet, le niveau de transmission de transmission de la lumière et des rayons infrarouges est conservé après une période de 1000 heures à la température de 725°C, période qui correspond aux conditions maximales d'utilisation de la vitrocéramique en tant que plaque de cuisson.

Outre l'application dans le domaine culinaire pour la réalisation de plaques et d'ustensiles de cuisson, la vitrocéramique colorée ou incolore obtenue à partir du verre alumino-silicate de lithium dans les conditions du procédé d'affinage de l'invention peut être utilisée pour produire des fenêtres de visualisation pour des appareils de chauffage, par exemple des poêles ou des inserts de cheminée.

Les exemples qui suivent permettent d'illustrer l'invention sans toutefois la limiter.

A partir d'un mélange de matières premières vitrifiables conventionnelles, sous forme d'oxydes ou d'autres composés capables de donner des oxydes par décomposition thermique, on fond des verres dont la composition figure dans le tableau 1 ci-dessous (en pourcentage pondéral).

Aux matières premières vitrifiables, on ajoute un agent affinant, le cas échéant du coke, dans la teneur indiquée dans le tableau 1.

Dans un creuset en platine préchauffé à 1600°C, on place 400 g du mélange de matières premières vitrifiables précité (hauteur : 40 mm) et l'ensemble est introduit dans un four électrique à moufle à 1600°C pendant 6 heures. Après refroidissement du creuset à la température ambiante, on découpe une lame à faces parallèles de 4 mm d'épaisseur au centre du bloc de verre dans le sens de la hauteur.

La lame est polie sur les deux faces jusqu'à ce que l'épaisseur de la lame soit égale à 3 mm, puis elle subit un traitement de céramisation pour former une vitrocéramique, ce traitement étant opéré selon le cycle comprenant les étapes a) à e) décrit précédemment.

La lame de vitrocéramique est soumise à un traitement de vieillissement à 725°C pendant 1000 heures.

Sur la lame, on mesure le facteur de transmission lumineuse, sous illuminant D65, (TL_{D65} ; norme CIE - 1931) et le facteur de transmission du rayonnement infrarouge (T_{IR} ; norme EN 410), avant et après le vieillissement.

**TABLEAU 1**

| EXEMPLE | 1 (comparatif) | 2 (comparatif) | 3 (comparatif) | 4 | 5 | 6 | 7 | 8 | 9 | 10 |
|---|---|---|---|---|---|---|---|---|---|---|
| SiO₂ (%) | 68,8 | 68,8 | 68,8 | 68,8 | 68,8 | 68,8 | 68,8 | 68,8 | 68,8 | 68,8 |
| Al₂O₃ (%) | 19,5 | 19,5 | 19,5 | 19,5 | 19,5 | 19,5 | 19,5 | 19,5 | 19,5 | 19,5 |
| Li₂O (%) | 3,5 | 3,5 | 3,5 | 3,5 | 3,5 | 3,5 | 3,5 | 3,5 | 3,5 | 3,5 |
| MgO (%) | 1,2 | 1,2 | 1,2 | 1,2 | 1,2 | 1,2 | 1,2 | 1,2 | 1,2 | 1,2 |
| ZnO (%) | 1,7 | 1,7 | 1,7 | 1,7 | 1,7 | 1,7 | 1,7 | 1,7 | 1,7 | 1,7 |
| TiO₂ (%) | 2,7 | 2,7 | 2,7 | 2,7 | 2,7 | 2,7 | 2,7 | 2,7 | 2,7 | 2,7 |
| ZrO₂ (%) | 1,7 | 1,7 | 1,7 | 1,7 | 1,7 | 1,7 | 1,7 | 1,7 | 1,7 | 1,7 |
| BaO (%) | 0,8 | 0,8 | 0,8 | 0,8 | 0,8 | 0,8 | 0,8 | 0,8 | 0,8 | 0,8 |
| V₂O₅ (%) | 0,08 | 0,08 | 0,22 | 0,08 | 0,08 | 0,04 | 0,11 | 0,11 | 0,08 | 0,08 |
| Agent d'affinage | aucun | SnO₂ | AS₂O₃ | ZnS | ZnS | ZnS | ZnS | ZnS | ZnS | ZnS |
| Quantité (%) | - | 0,3 | 0,5 | 0,09 | 0,52 | 0,52 | 0,52 | 0,43 | 0,52 | 0,32 |
| Coke (%) | 0,10 | - | - | 0,10 | 0,10 | 0,10 | 0,05 | 0,06 | 0,06 | 0,10 |
| TL_{D65} (%) | | | | | | | | | | |
| Avant vieillissement | 18,4 | 2,6 | 2,5 | 5,8 | 0,3 | 0,2 | 0,7 | 0,6 | 1,7 | 2,0 |
| Après vieillissement | 27,0 | 3,2 | 0,4 | 4,3 | 0,9 | 1,5 | 0,1 | 0,2 | 2,9 | 4,3 |
| T_{IR} (%) | | | | | | | | | | |
| Avant vieillissement | 70,3 | 69,0 | 61,0 | 69,3 | 62,8 | 19,2 | 61,0 | 61,3 | 62,8 | 62,6 |
| Après vieillissement | 72,0 | 69,8 | 49,7 | 68,8 | 68,1 | 66,2 | 55,2 | 58,5 | 64,4 | 66,6 |

Les verres des exemples 1, 2, 6, 9 sont fondus dans un four à flamme ayant une surface de fusion égale à 0,5 m². Le mélange de matières premières vitrifiables est introduit en continu dans le four. La température moyenne du bain de verre était égale à 1650°C et la tirée de 13 kg/heure.

Le verre s'écoulant à la sortie du four est prélevé dans un moule en acier. Après refroidissement, le verre est découpé en lames et poli sur les deux faces principales jusqu'à obtenir une épaisseur de 4 mm. Sur les lames, on dénombre les bulles en utilisant un logiciel de traitement d'image (profondeur de champ : 5 mm).

Les résultats sont les suivants :

| | Ex. 2 (comparatif) | Ex. 3 (comparatif) | Ex. 6 | Ex. 9 |
|---|---|---|---|---|
| Nombre de bulles/cm3 | 900 | 200 | 9 | 20 |

L'introduction de ZnS dans le verre selon l'invention (exemples 6 et 9) permet d'obtenir une excellente qualité d'affinage avec un taux de bulles plus faible qu'avec SnO₂ (exemple 2) ou As₂O₃ (exemple 3)..

## Revendications

1. Procédé d'affinage de verre alumino-silicate de lithium, apte à céramiser de façon contrôlée, et exempt d'oxyde d'arsenic, d'oxyde d'antimoine et d'oxyde d'étain, **caractérisée en ce que** l'on ajoute au moins 0,05 % en poids d'au moins un sulfure choisi parmi le sulfure de zinc, le sulfure de fer, le sulfure d'argent, les sulfures de métal alcalin et les sulfures de métal alcalino-terreux dans les matières premières vitrifiables et on fond lesdites matières à une température supérieure à 1600°C et inférieure ou égale à 1700°C.

2. Procédé selon la revendication 1, **caractérisé en ce que** le sulfure est le sulfure de zinc.

3. Procédé selon l'une des revendications 1 ou 2, **caractérisé en ce que** la quantité de sulfure ajouté est inférieure à 2 %, de préférence inférieure à 1 % et mieux encore comprise entre 0,07 et 0,8 % du poids total des matières vitrifiables.

4. Procédé selon l'une des revendications 1 à 3, **caractérisé en ce que** du coke ou un composé carboné est ajouté aux matières premières vitrifiables.

5. Verre alumino-silicate de lithium apte à céramiser de façon contrôlée, obtenu par le procédé selon l'une des revendications 1 à 4, **caractérisé en ce qu'**il est exempt d'oxyde d'arsenic, d'oxyde d'antimoine et d'oxyde d'étain.

6. Vitrocéramique obtenue à partir du verre alumino-silicate de lithium obtenu par le procédé selon l'une des revendications 1 à 4, **caractérisée** en qu'elle est dénuée d'oxyde d'arsenic, d'oxyde d'antimoine et d'oxyde d'étain, en ce qu'elle contient au moins agent colorant choisi parmi Fe₂O₃, NiO, Cr₂O₃, CuO, CoO, Mn₃O₄ et V₂O₅, et en ce qu'elle présente un facteur de transmission lumineuse sous illuminant D65 (TL_{D65}) inférieur ou égal à 6 % et un facteur de transmission des radiations infrarouges (T_{IR}) supérieur à 50 %, mesurés sous une épaisseur de 3 mm.

7. Vitrocéramique selon la revendication 6, **caractérisée en ce qu'**elle présente un facteur T_{IR} supérieur à 60 %, de préférence supérieur à 65 %.

8. Vitrocéramique selon l'une des revendications 6 ou 7, **caractérisée en ce que** le pourcentage de chaque agent colorant est inférieur ou égal à 1 % et la somme des pourcentages des agents colorants est au moins égale à 0,02 %, de préférence au moins égale à 0,045 %, et n'excède pas 2 %.

9. Vitrocéramique selon l'une des revendications 6 à 8, **caractérisée en ce qu'**elle renferme 0,045 à 1 % en poids de V₂O₅, de préférence de 0,045 à 0,5 %, avantageusement de 0,045 à 0,2 % et mieux encore de 0,06 à 0,15 %.

10. Vitrocéramique selon l'une des revendications 6 à 9, **caractérisée en ce que** le verre comprend les constituants suivants dans les limites définies ci-après exprimées en pourcentages pondéraux :
| | |
|---|---|
| SiO₂ | 52 - 75 % |
| Al₂O₃ | 18 - 27 % |
| Li₂O | 2,5 - 5,5 % |
| K₂O | 0 - 3 % |
| Na₂O | 0 - 3 % |
| ZnO | 0 - 3,5 % |
| MgO | 0 - 3 % |
| CaO | 0 - 2,5 |
| BaO | 0 - 3,5 % |
| SrO | 0 - 2 % |
| TiO₂ | 1,2 - 5,5 % |
| ZrO₂ | 0 - 3 % |
| P₂O₅ | 0 - 8 % |

11. Vitrocéramique selon la revendication 10, **caractérisé en ce que** le verre a la composition suivante :
| | |
|---|---|
| SiO₂ | 65 - 70 % |
| Al₂O₃ | 18 - 19,8 % |
| Li₂O | 2,5 - 3,8 % |
| K₂O | 0 - <1,0 % |
| Na₂O | 0 - <1,0 % |
| ZnO | 1,2 - 2,8 % |
| MgO | 0,55 - 1,5 % |
| BaO | 0 - 1,4 % |
| SrO | 0 - 1,4 % |
| TiO₂ | 1,8 - 3,2 % |
| ZrO₂ | 1,0 - 2,5 % |

12. Utilisation de la vitrocéramique selon l'une des revendications 6 à 11 pour la réalisation de plaques et d'ustensiles de cuisson.

13. Utilisation de la vitrocéramique selon l'une des revendications 6 à 11 pour la réalisation de fenêtre de cheminée ou de poêle.

## Patentansprüche

1. Verfahren zum Läutern eines Lithiumaluminiumsilikatglases, das kontrolliert keramisierbar und frei von Arsenoxid, Antimonoxid und Zinnoxid ist, **dadurch gekennzeichnet, dass** mindestens 0,05 Gew.-% von mindestens einem Sulfid, ausgewählt aus Zinksulfid, Eisensulfid, Silbersulfid, Alkalimetallsulfiden und Erdalkalimetallsulfiden, den Gemengerohstoffen zugesetzt werden, und dass die Stoffe bei einer Temperatur von über 1600 °C und unter oder gleich 1700 °C geschmolzen werden.

2. Verfahren nach Anspruch 1, **dadurch gekennzeichnet, dass** das Sulfid Zinksulfid ist.

3. Verfahren nach einem der Ansprüche 1 oder 2, **dadurch gekennzeichnet, dass** die zugesetzte Sulfidmenge unter 2 %, bevorzugt unter 1 %, und besser noch zwischen 0,07 und 0,8 % des Gesamtgewichts der Gemengematerialien liegt.

4. Verfahren nach einem der Ansprüche 1 bis 3, **dadurch gekennzeichnet, dass** Koks oder eine Kohlenstoffverbindung den Gemengerohstoffen zugesetzt wird.

5. Kontrolliert keramisierbares Lithiumaluminiumsilikatglas, erhalten durch das Verfahren nach einem der Ansprüche 1 bis 4, **dadurch gekennzeichnet, dass** es kein Arsenoxid, Antimonoxid und Zinnoxid enthält.

6. Glaskeramik, die aus Lithiumaluminiumsilikatglas erhalten wurde, das durch das Verfahren nach einem der Ansprüche 1 bis 4 erhalten wurde, **dadurch gekennzeichnet, dass** sie kein Arsenoxid, Antimonoxid und Zinnoxid aufweist, wobei sie mindestens einen aus Fe₂O₃, NiO, Cr₂O₃, CuO, CoO, Mn₃O₄ und V₂O₅ ausgewählten Farbstoff enthält, und wobei sie einen Lichtdurchlässigkeitsfaktor unter D65-Beleuchtung (LD_{D65}) von weniger als oder gleich 6 % aufweist und einen Durchlässigkeitsfaktor für Infrarotstrahlen (Dᵢᵣ) von über 50 %, die bei einer Dicke von 3 mm gemessen sind.

7. Glaskeramik nach Anspruch 6, **dadurch gekennzeichnet, dass** sie einen Faktor Dᵢᵣ von über 60 %, bevorzugt von über 65 %, aufweist.

8. Glaskeramik nach einem der Ansprüche 6 oder 7, **dadurch gekennzeichnet, dass** der Prozentsatz jedes Farbstoffs weniger als oder gleich 1 % beträgt und die Summe der Prozentsätze der Farbstoffe mindestens gleich 0,02 % ist, bevorzugt mindestens gleich 0,045 %, und 2 % nicht überschreitet.

9. Glaskeramik nach einem der Ansprüche 6 bis 8, **dadurch gekennzeichnet, dass** sie 0,045 bis 1 Gew.-% von V₂O₅, bevorzugt 0,045 bis 0,5 %, vorteilhafterweise 0,045 bis 0,2 % und besser noch 0,06 bis 0,15 % enthält.

10. Glaskeramik nach einem der Ansprüche 6 bis 9, **dadurch gekennzeichnet, dass** das Glas die folgenden Bestandteile innerhalb der nachstehend definierten Grenzwerte, ausgedrückt in Gewichtsprozentsätzen, umfasst:
| | |
|---|---|
| SiO₂ | 52 - 75 % |
| Al₂O₃ | 18 - 27 % |
| Li₂O | 2,5 - 5,5 % |
| K₂O | 0 - 3 % |
| Na₂O | 0 - 3 % |
| ZnO | 0 - 3,5 % |
| MgO | 0 - 3 % |
| CaO | 0 - 2,5 |
| BaO | 0 - 3,5 % |
| SrO | 0 - 2 % |
| TiO₂ | 1,2 - 5,5 % |
| ZrO₂ | 0 - 3 % |
| P₂O₅ | 0 - 8 % |

11. Glaskeramik nach Anspruch 10, **dadurch gekennzeichnet, dass** das Glas die folgende Zusammensetzung aufweist:
| | |
|---|---|
| SiO₂ | 65 - 70 % |
| Al₂O₃ | 18 - 19,8 % |
| Li₂O | 2,5 - 3,8 % |
| K₂O | 0 - <1,0 % |
| Na₂O | 0 - <1,0 % |
| ZnO | 1,2 - 2,8 % |
| MgO | 0,55 - 1,5 % |
| BaO | 0 - 1,4 % |
| SrO | 0 - 1,4 % |
| TiO₂ | 1,8 - 3,2 % |
| ZrO₂ | 1,0 - 2,5 % |

12. Verwendung der Glaskeramik nach einem der Ansprüche 6 bis 11 zur Herstellung von Kochplatten und Kochutensilien.

13. Verwendung der Glaskeramik nach einem der Ansprüche 6 bis 11 zur Herstellung von Kaminfenstern oder Ofenfenstern.

## Claims

1. A method of refining lithium aluminosilicate glass capable of being controllably ceramized and free of arsenic oxide, antimony oxide and tin oxide, **characterized in that** at least 0.05% by weight of at least one sulfide chosen from zinc sulfide, iron sulfide, silver sulfide, alkali metal sulfides and alkaline-earth metal sulfides is added to the glass batch materials and said materials are melted at a temperature above 1600°C and below or equal to 1700°C.

2. The method as claimed in claim 1, **characterized in that** the sulfide is zinc sulfide.

3. The method as claimed in one of claims 1 or 2, **characterized in that** the amount of sulfide added is less than 2%, preferably less than 1% and better still between 0.07 and 0.8% of the total weight of the glass batch materials.

4. The method as claimed in one of claims 1 to 3, **characterized in that** coke or a carbonaceous compound is added to the glass batch materials.

5. Lithium aluminosilicate glass capable of being controllably ceramized, obtained by the method as claimed in one of claims 1 to 4, **characterized in that** it is free of arsenic oxide, antimony oxide and tin oxide.

6. Glass-ceramic obtained from a lithium aluminosilicate glass obtained by the method as claimed in one of claims 1 to 4, **characterized in that** it is devoid of arsenic oxide, antimony oxide and tin oxide, **in that** it contains at least one colorant chosen from Fe₂O₃, NiO, Cr₂O₃, CuO, CoO, Mn₃O₄ and V₂O₅, and **in that** it has a light transmission factor (TL_{D65}) under illuminant D65 not exceeding 6% and an infrared transmission factor (T_{IR}) of greater than 50%, these being measured for a thickness of 3 mm.

7. Glass-ceramic as claimed in claim 6, **characterized in that** it has a T_{IR} factor of greater than 60%, preferably grater than 65%.

8. Glass-ceramic as claimed in either of claims 6 or 7, **characterized in that** the percentage of each colorant is 1% or less and the sum of the percentages of the colorants is at least 0.02%, preferably at least 0.045%, but does not exceed 2%.

9. Glass-ceramic as claimed in one of claims 6 to 8, **characterized in that** it contains 0.045 to 1%, preferably 0.045 to 0.5%, advantageously 0.045 to 0.2% and better still 0.06 to 0.15% by weight of V₂O₅.

10. Glass-ceramic as claimed in one of claims 6 to 9, **characterized in that** the glass comprises the following constituents within the limits defined below, which are expressed in percentages by weight:
| | |
|---|---|
| SiO₂ | 52 - 75% |
| Al₂O₃ | 18 - 27% |
| Li₂O | 2.5 - 5.5% |
| K₂O | 0 - 3% |
| Na₂O | 0 - 3% |
| ZnO | 0 - 3.5% |
| MgO | 0 - 3% |
| CaO | 0 - 2.5% |
| BaO | 0 - 3.5% |
| SrO | 0 - 2% |
| TiO₂ | 1.2 - 5.5% |
| ZrO₂ | 0 - 3% |
| P₂O₅ | 0 - 8%. |

11. Glass-ceramic as claimed in claim 10, **characterized in that** the glass has the following composition:
| | |
|---|---|
| SiO₂ | 65 - 70% |
| Al₂O₃ | 18 - 19.8% |
| Li₂O | 2.5 - 3.8% |
| K₂O | 0 - <1.0% |
| Na₂O | 0 - <1.0% |
| ZnO | 1.2 - 2.8% |
| MgO | 0.55 - 1.5% |
| BaO | 0 - 1.4% |
| SrO | 0 - 1.4% |
| TiO₂ | 1.8 - 3.2%. |
| ZrO₂ | 1.0 - 2.5% |

12. The use of the glass-ceramic as claimed in one of claims 6 to 11 to produce cooktops and cooking utensils.

13. The use of the glass-ceramic as claimed in one of claims 6 to 11 to produce chimney or store windows.
